# EUROPEAN PATENT SPECIFICATION

(11) **EP 3 357 897 B1**
(45) Date of publication and mention of the grant of the patent: **04.09.2024**
(21) Application number: 16787485.8
(22) Date of filing: 28.09.2016
(51) Int. Cl.: C05F 11/00, C05F 11/10, A01C 1/06, A01N 65/20, C05G 3/00, C05G 5/23

(54) **USE OF ACACIA PLANT EXTRACT TO PROMOTE RADICULAR GROWTH AND RADICULAR ACTIVITY IN PLANTS**
VERWENDUNG EINES EXTRAKTES AUS DER AKAZIENPFLANZE ZUR ANREGUNG DES RADIKULÄREN WACHSTUMS UND RADIKULÄREN AKTIVITÄT BEI PFLANZEN
UTILISATION D'EXTRAIT D'ACACIA POUR FAVORISER LA CROISSANCE DES RACINES ET L'ACTIVITÉ RACINAIRE DES PLANTES

(30) Priority: 29.09.2015 ES 201531380
(43) Date of publication of application: 08.08.2018
(73) Proprietor: Biopharma Research S.A., 14540 La Rambla Cordoba (ES)
(72) Inventor: NIETO DEL RIO, Juan, 14450 La Rambla (Cordoba) (ES)
(74) Representative: Sahuquillo Huerta, Jesús
(86) International application number: PCT/ES2016/070678
(87) International publication number: WO 2017/055660

(56) References cited:
- EP-A2- 0 245 931
- CN-A- 105 837 369
- US-A1- 2014 121 100
- DATABASE WPI Week 201581, Derwent World Patents Index; AN 2015-69045U, XP002765164
- DANIELA C&#X1CE;LINA ET AL: "Daniela Cǎlina et al. -Chromatographic analysis of the flavonoids from Robinia pseudoacacia species Original Paper Chromatographic Analysis of the Flavonoids from Robinia Pseudoacacia Species", 10 October 2013 (2013-10-10), pages 232 - 236, XP055328233, Retrieved from the Internet <URL:https://www.ncbi.nlm.nih.gov/pmc/articles/PMC3945265/pdf/CHSJ-39-4-232.pdf> [retrieved on 20161212]

## Description

### Technical Field

The present invention relates to the use of a plant extract obtained from a hydroalcoholic maceration of flowers from *Robinia pseudoacacia* species, employed alone or added to agricultural formulations, which has been demonstrated to promote the growth and functioning of the plant roots, activating and increasing the number of secondary roots and absorbent hairs. Furthermore, the emission of seed germ is stimulated by this plant extract. Also, the application mode in agriculture is described.

### Background Art

The root system of plants is a key part for the vegetative growth. In addition to mechanical support, their critical function is to absorb water and nutrients that allow the growth of the whole plant, as well as serving as organs for accumulation of reserve nutrients. Therefore, the root growth affects to the crop productivity and, if such development is not correct, it can even cause death to the affected plant.

The development of the plant root systems is influenced by factors such as temperature, humidity, aeration or mechanical resistance of the soil, among other factors, in addition to biological and phytosanitary variables.

Plant extracts of the genus Acacia are well known in agriculture and they are used for the formulation of products due to their antimicrobial and antifungal action, thanks to compounds contained therein as phenols, terpenes or saponins, among others. These compounds have been extensively studied for years due to their antioxidant properties, inhibiting the generation of reactive oxygen species (ROS) and decreasing their levels once these reactive oxygen species are generated. Specifically, there are numerous studies about the antioxidant activity and the compounds responsible for this activity using extracts from various parts of the *Robinia pseudoacacia* species, particularly flowers (Calina D., Olah N. K., Patru E., Docea A., Popescu H., Bubulica M. V. Chromatographic analysis of the flavonoids from Robinia Pseudoacacia species. Current Health Sciences Journal 39 (2013) 232-236*;* Ji H., Du A., Zhang L., Xu C., Yang M., Li F. Effects of drying methods on antioxidant properties in Robinia pseudoacacia L. flowers. Journal of Medicinal Plants Research 6 (2012), 3233-3239*;* Tian F., McLaughlin J.L. Bioactive flavonoids from the black locust tree, Robinia pseudoacacia. Pharmaceutical Biology 38 (2000), 229-234*;* Veitch N. C., Elliott P. C., Kite G. C., Lewis G. P. Flavonoid glycosides of the black locust tree, Robinia pseudoacacia (Leguminosae). Phytochemistry 71 (2010) 479-486*).* Also, volatile compounds from similar plant extracts were analyzed *(*Xie J., Sun B., Yu M. Constituents of top fragrance from fresh flowers of Robinia Pseudoacacia L. occurring in China. Flavour and Fragrance Journal 21 (2006) 798-800*).*

These extracts have been used in medicine to treat bleeding, arthritis or antispasmodic, as antitussive or with sedative effects. In agriculture, they have been employed taking advantage of their antibacterial and antifungal effects *(*Zhang ZY, Dai GH, Zhuge YY, Li YB Protective effect of Robinia pseudoacacia Linn 1 extracts cucumber powdery mildew fungus Against, Sphaerotheca fuliginea. Crop Protection 27 (2008) 920-925*),* but until now, there are no references to the use of extracts from *Acacia* species to favour the plant rooting or to be employed in agricultural formulation products.

It is known that the main signal for developing new roots are phytohormones, such as auxins, although elements like nitrogen, phosphorus or calcium also influence the root activity of plants. Furthermore, patent WO 2013/186405 A1 refers to a liquid formulation that stimulates the germination of seeds and the rooting of plants, including water-soluble addition compounds from the K vitamin group together with complexed microelements and essential amino acids. However, there are no references that define the use of plant extracts, specifically *Robinia pseudoacacia* species, for improvement both growth and root activity in plants.

### Summary of invention

The document CN104926381 discloses a starwort dedicated ecological organic composite fertilizer prepared from tea dregs. The composite fertilizer is characterized by being prepared from the following components: 100 parts of dry tea dregs, 20 to 30 parts of decomposed cattle manure, 3 to 5% of microbial nitrogen, 4 to 5% of organic phosphor fertilizer, 2 to 5% of organic potassium fertilizer, and 10 to 15 parts of fallen leaf powder; wherein the dry tea dregs are residues of recovered green tea, oolong tea, and Dahongpao tea, the microbial nitrogen is a novel fertilizer synergist prepared by subjecting trichoderma harzianum submerged broth to vacuum concentration, the organic phosphor fertilizer is a humic acid phosphor fertilizer, the organic potassium fertilizer is potassium humate, and the fallen leaf powder is fine powder (1-2 mm) prepared from fallen leaves of amorpha fruticosa, robinia pseudoacacia, and pine, and is prepared through steps of composting, aging, drying, and grinding. The provided composite fertilizer has the advantages of low cost and strong adaptability and is capable of reducing the pests/diseases and promoting the growth of starwort.

The document EP0245931 discloses nodulation gene-inducing factors have been isolated and identified. A number of substituted flavones, some of which are components of exudates and extracts of leguminous plants, have been found to induce expression of certain nodulation genes in Rhizobium strains. Three components of clover extract 7,4'-dihydroxyflavone, 7,4'-dihydroxy-3'-methoxyflavone, and 4'-hydroxy-7-methoxyflavone have been identified as nodulation inducers of certain Rhizobium trifolii nod genes. A number of other flavanoids including flavones, flavanones, flavanols and dihydroflavanols, not necessarily found in legume exudates, were also found to induce expression of certain nodulation genes.

The document US2014121100 e seed treatment compositions comprising one or more glutathiones for enhancing plant growth and methods thereof. Further described are seeds coated with the seed treatment compositions described herein.

However, none of the cited documents discloses a use of an extract of Robinia pseudoacacia according to claim 1.

The present invention relates to the use of a hydroalcoholic extract from *Robinia pseudoacacia* species according to claim 1, as root activity stimulant for plants. This extract improves rooting due to the activation and increase of roots and absorbent hairs, while the emission of germ in seeds is facilitated. This extract can be combined in agricultural formulations, so that a contribution of basic plant nutrients would be achieved while the root mass is increased, and the absorption and assimilation of compounds present in the soil is favoured through the roots.

Acacia extract is prepared as a hydroalcoholic solution containing the active ingredients of the plant. For this purpose, a maceration of dried flowers from Robinia pseudoacacia in a mixture of alcohol and water is carried out; wherein the alcohol in the maceration mixture is propylene glycol in a percentage of 50% w/w; the water in the maceration mixture is in a percentage of 40% w/w; and the dried flowers in the maceration mixture are in a percentage of 10% w/w .

In order obtain the extract, the maceration mixture is maintained at room temperature under stirring for time sufficient to extract all the active compounds from the dry flowers to the extraction mixture. After the stirring process, the mixture is filtered, and the extract is kept at room temperature until further use.

The application of this plant extract on crops (either alone or added to agricultural formulations) entails an increase in the root activity of plants. Furthermore, the use of Acacia extract improves rooting because of an increase in the number and density of secondary roots and absorbent hairs, while their employment stimulates the functioning of these roots. This extract also favours the emission of seed germ.

There is no limitation regarding the plant species whose root activity can be favoured by the plant extract described.

The application can be performed during the entire crop cycle, preferably in moments of greater root activity, when the nutrient demand of the plant is greater or when it is subjected to stress situations produced by adverse weather conditions.

A preferential application comprises the application of the extract or formulations containing this extract by mean of irrigation.

A second preferential application includes the application of the extract or formulations containing this extract by foliar application, achieving the same effects of root growth as when the extract is directly applied to the root by irrigation.

In another preferential application, the plantlets or cuttings are dipped in the diluted extract composition object of this invention or agricultural formulations containing the diluted extract, prior to being planted, with the aim to stimulate the root system.

Another preferential application involves the pulverization or dipping the seed using a solution containing the extract, or using agricultural formulations containing this extract, to accelerate the germination process.

All this in accordance with the claims accompanying the present descriptive report.

Throughout the description and claims the word "comprise" and its variations are not intended to exclude other technical features, additives, components or steps. For those skilled in the art, other objects, advantages and features of the invention will arise partly from the description and partly from practice of the invention. The following examples and drawings are provided by way of illustration and are not intended to restrict the present invention. Furthermore, the present invention covers all possible combinations of preferred embodiments set forth herein.

### Brief description of drawings

Below goes on to describe very briefly a series of drawings which aid in better understanding the invention and which are expressly related to an embodiment of said invention presented as a non-limiting example thereof.
Figure 1. Length of roots (cm) in garlic irrigated with different solutions of Acacia extract after 9, 12 and 15 days from the beginning of the test.
Figure 2. Length of roots in onions corresponding to the control area and the area treated with an agricultural formulation containing Acacia extract.
Figure 3. Onions root mass (g/cm³) corresponding to the control area and the area treated with an agricultural formulation containing Acacia extract.

### Description of embodiments

To check the effectiveness of hydroalcoholic extract of Acacia as a stimulant for the growth and the root activity in plants, the test described below was carried out.

Solutions with the proposed extract in this invention were prepared at the following percentages:
Control - 0%
A - 7.5%
B - 20%
C - 50%
D - 100%

Transparent plastic recipients containing a piece of cotton moistened with water, and garlic cloves with comparable size and weight among them were prepared.

Garlic cloves were immersed for 30 seconds in the solution containing the corresponding concentration of *Robinia pseudoacacia* extract listed above, and then, the moistened garlic cloves were deposited in the corresponding recipients. For each concentration of the extract of the invention, as well as for the control, three replicates were tested.

Recipients were kept in a bright place with temperature as constant as possible, carrying out daily observations for fifteen days. Cotton should be kept moist continuously, for which every day a similar amount of water was added to all recipients and once every 3 days a constant volume of extract solution corresponding to each case (A, B, C or D) was added.

Observations of the recipients were carried out to to detect the garlic cloves that start to germinate first. It was observed that after 15 days all garlic cloves had germinated. The garlic cloves deposited in the recipients corresponding to the concentration tests B and C germinated on the 3^{rd} day. On 4^{th} day the garlic cloves deposited in two of the recipients corresponding to the test A and the garlic cloves deposited in two of the recipients corresponding to the test D began to germinate. On 5^{th} day, the garlic cloves marked as control and the remaining garlic cloves deposited in the recipients marked as test A and D, were germinated. The watering of the garlic cloves with a solution of the extract object of this invention involved, firstly, an advance in the garlic germination time.

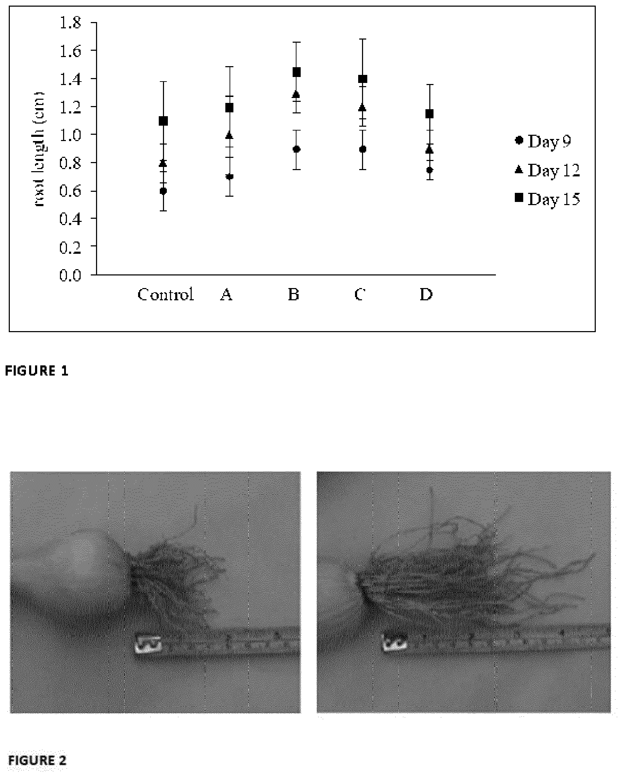

Measurements of root length (cm) were performed on days 9^{th}, 12^{th} and 15^{th}, and results obtained from measurements root length are shown in Figure 1. Along the entire study period is noted that the root length of the garlics irrigated with *Robinia pseudoacacia* extract is greater. These results confirm the effect as root activator of the mentioned extract.

Acacia extract may be included in any fertilizer formulation in which composition can be found nutrients as: nitrogen, phosphorus or potassium, amino acids, microelements, secondary nutritional elements and/or vitamins, among others; obtaining as result the improvement of the effect of root activation and therefore the vegetative activation of the plant. Thus, a mixture of agricultural formulation containing *Robinia pseudoacacia* extract which will be present in the mixture in a preferred percentage between 5 and 50% is chosen.

A second test was performed to check the effect of a formulation containing the plant extract in a percentage of 10%. The aim of this test was to favour the growth and root activity on an onion plantation. For this purpose, two different and separate zones within the plantation were identified. A zone was taken as control area, and over the other zone, two foliar applications of the aqueous solution containing the Acacia extract were performed.

At the time of harvest, random plants were taken from each of the two zones (control and application), and it was observed that the application of the aqueous solution containing the plant extract had resulted in onions with roots with longer length, as shown in Figure 2.

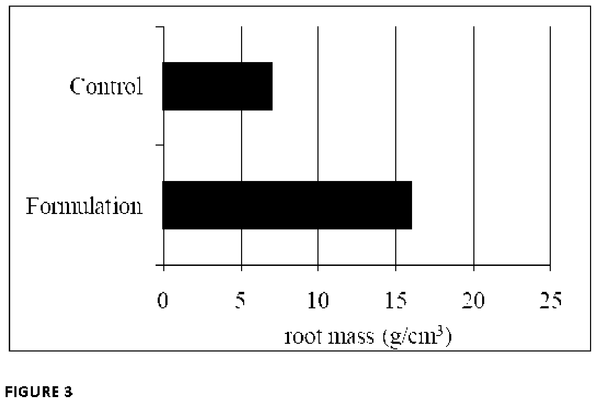

Also, the root mass was measured in plants harvested (expressed as g/cm³ of ground) and the average of this parameter was calculated. Results obtained are shown in Figure 3. It is demonstrated that the application of an agricultural formulation containing hydroalcoholic extract of *Robinia pseudoacacia favours* growth and functioning of the plant roots, activating and increasing the number of secondary roots and absorbent hairs and, consequently, the plant root mass.

## Claims

1. A use of an extract from *Robinia Pseudoacacia* or an agricultural formulation containing such extract to enhance growth and activity of roots in plants; wherein the extract from *Robinia Pseudoacacia* is obtained by mean of a maceration of dried flowers from Robinia pseudoacacia in a mixture of alcohol and water; wherein the alcohol in the maceration mixture is propylene glycol in a percentage of 50% w/w; the water in the maceration mixture is in a percentage of 40% w/w; and the dried flowers in the maceration mixture are in a percentage of 10% w/w.

2. The use of an extract from *Robinia Pseudoacacia* according to claim 1 which comprises to apply the extract or agricultural formulation containing the extract through irrigation.

3. The use of an extract from *Robinia Pseudoacacia* according to claim 1 which comprises to apply the extract or agricultural formulation containing the extract through foliar application.

4. The use of an extract from *Robinia Pseudoacacia* according to claim 1 which comprises to immerse plantlets or cuttings prior to being planted in a diluted extract from Robinia pseudoacacia composition or agricultural formulation containing the extract from *Robinia Pseudoacacia* to stimulate the root system.

5. The use of an extract from *Robinia Pseudoacacia* according to claim 1 which comprises dipping or spraying seeds with a solution of the extract from *Robinia Pseudoacacia* or agricultural formulation containing this extract to accelerate their germination.

## Patentansprüche

1. Verwendung eines Extrakts aus *Robinia Pseudoacacia* oder einer landwirtschaftlichen Formulierung, die einen solchen Extrakt enthält, um das Wachstum und die Aktivität von Wurzeln in Pflanzen zu verstärken, wobei der Extrakt aus *Robinia Pseudoacacia* durch Mazeration von getrockneten Blüten aus Robinia Pseudoacacia in einem Gemisch aus Alkohol und Wasser erhalten wird, wobei der Alkohol in dem Mazerationsgemisch Propylenglykol in einem Prozentsatz von 50 % Gew./Gew. ist, das Wasser in dem Mazerationsgemisch in einem Prozentsatz von 40 % Gew./Gew. ist und die getrockneten Blüten in dem Mazerationsgemisch in einem Prozentsatz von 10 % Gew./Gew. sind.

2. Verwendung eines Extrakts aus *Robinia Pseudoacacia* nach Anspruch 1, die darin besteht, den Extrakt oder eine landwirtschaftliche Formulierung, die den Extrakt enthält, durch Bewässerung auszubringen.

3. Verwendung eines Extrakts aus *Robinia Pseudoacacia* gemäß Anspruch 1, die darin besteht, den Extrakt oder eine landwirtschaftliche Formulierung, die den Extrakt enthält, durch Blattapplikation anzuwenden.

4. Verwendung eines Extrakts aus *Robinia Pseudoacacia* nach Anspruch 1, umfassend das Eintauchen von Setzlingen oder Stecklingen vor dem Einpflanzen in einen verdünnten Extrakt aus Robinia Pseudoacacia-Zusammensetzung oder landwirtschaftliche Formulierung, die den Extrakt aus *Robinia Pseudoacacia* enthält, um das Wurzelsystem zu stimulieren.

5. Verwendung eines Extrakts aus *Robinia Pseudoacacia* nach Anspruch 1, umfassend das Eintauchen oder Besprühen von Samen mit einer Lösung des Extrakts aus *Robinia Pseudoacacia* oder einer landwirtschaftlichen Formulierung, die diesen Extrakt enthält, um ihre Keimung zu beschleunigen.

## Revendications

1. Utilisation d'un extrait de Robinia *Pseudoacacia* ou d'une formulation agricole contenant cet extrait pour améliorer la croissance et l'activité des racines des plantes ; l'extrait de *Robinia Pseudoacacia* est obtenu par macération de fleurs séchées de Robinia Pseudoacacia dans un mélange d'alcool et d'eau ; l'alcool dans le mélange de macération est du propylène glycol dans un pourcentage de 50 % p/p ; l'eau dans le mélange de macération est dans un pourcentage de 40 % p/p ; et les fleurs séchées dans le mélange de macération sont dans un pourcentage de 10 % p/p.

2. Utilisation d'un extrait de *Robinia Pseudoacacia* selon la revendication 1, qui comprend l'application de l'extrait ou de la formulation agricole contenant l'extrait par irrigation.

3. Utilisation d'un extrait de *Robinia Pseudoacacia* selon la revendication 1, qui comprend l'application de l'extrait ou de la formulation agricole contenant l'extrait par voie foliaire.

4. Utilisation d'un extrait de *Robinia Pseudoacacia* selon la revendication 1 qui consiste à immerger des plantules ou des boutures avant leur plantation dans une composition diluée d'extrait de Robinia Pseudoacacia ou une formulation agricole contenant l'extrait de *Robinia Pseudoacacia* pour stimuler le système racinaire.

5. Utilisation d'un extrait de *Robinia Pseudoacacia* selon la revendication 1 qui comprend le trempage ou la pulvérisation de graines avec une solution de l'extrait de *Robinia Pseudoacacia* ou une formulation agricole contenant cet extrait pour accélérer leur germination.
